# DEMANDE DE BREVET EUROPEEN

(11) **EP 1 107 407 A1**
(43) Date de publication de la demande: **13.06.2001**
(21) Numéro de dépôt: 00403247.0
(22) Date de dépôt: 21.11.2000
(51) Int. Cl.: H02B 1/30

(54) **Agrafe métallique et élastique pour la fixation et/ou l'établissement d'une continuité électrique avec une plaque, et armoire mettant en oeuvre de telles agrafes**

(30) Priorité: 02.12.1999 FR 9915201
(71) Demandeur: LEGRAND, F-87000 Limoges (FR); LEGRAND SNC, F-87000 Limoges (FR)
(72) Inventeur: Dufosse, David, 76150 Maromme (FR)
(74) Mandataire: CABINET BONNET-THIRION

(57) **Abrégé**

II s'agit d'une agrafe (20), métallique et élastique, mise en oeuvre pour la fixation d'une plaque (17) et/ou l'établissement d'une continuité électrique avec une telle plaque (17).

Suivant l'invention, destinée à intervenir entre un élément de bâti (12) qui surplombe au moins localement un panneau (14) permettant de contrebuter la plaque (17) à fixer, l'agrafe (20) comporte, suivant une forme générale de L, un jambage (26) et une traverse (27), le jambage (26) comportant, à distance de la traverse (27), une console (28) par laquelle il est apte à trouver un appui sur une partie au moins de l'élément de bâti (12) tournée vers le panneau (14), et la traverse (27) présentant, à l'opposé du jambage (26), des moyens de prise (30, 40) sur la plaque (17) à fixer.

Application, notamment, à la fixation d'une plaque d'ajour dans une armoire électrique.

## Description

La présente invention concerne d'une manière générale les agrafes métalliques et élastiques du type de celles mises en oeuvre pour la fixation d'une plaque et/ou l'établissement d'une continuité électrique avec une telle plaque.

Elle vise plus particulièrement, mais non nécessairement exclusivement, le cas où de telles agrafes, en général formées chacune à partir d'un feuillard métallique, par exemple en acier, convenablement découpé et plié, interviennent au sein d'une armoire, et en particulier d'une armoire électrique, c'est-à-dire d'une armoire destinée à contenir du matériel électrique.

Plus particulièrement, encore, la présente invention concerne le cas où une telle armoire comporte un bâti, formé d'éléments de bâti, et un habillage, formé de panneaux.

Pour le passage, éventuel, de câbles électriques, l'un au moins de ces panneaux, par exemple le panneau horizontal inférieur, est évidé d'au moins un ajour, et cet ajour est fermé de manière amovible par une plaque, dite plaque d'ajour, présentant les passages de câble nécessaires.

Pour la fixation de cette plaque d'ajour, et/ou pour l'établissement d'une continuité électrique avec celle-ci, il est couramment mis en oeuvre des agrafes métalliques et élastiques, qui, prenant appui sur un élément de bâti, portent sur la plaque d'ajour et la sollicitent donc en application, directement ou indirectement, contre le panneau concerné, autour de l'ajour de celui-ci.

Lorsqu'une continuité électrique est recherchée, et cela est en pratique le cas le plus général, ces agrafes ont pour avantage d'être en mesure de pouvoir permettre d'assurer automatiquement cette continuité électrique du simple fait du montage mécanique correspondant, au bénéfice de la sécurité.

Il importe, cependant, au premier chef, et de manière au moins apparemment contradictoire, que, d'une part, pour l'utilisateur, leur mise en place et leur retrait éventuel soient simples et aisés, pour faciliter les opérations nécessaires, et que, d'autre part, leur tenue mécanique une fois en place soit bonne et sûre.

Il importe, également, que, lorsqu'une continuité électrique est recherchée, la continuité électrique obtenue soit elle-même bonne.

La présente invention a tout d'abord pour objet une agrafe métallique et élastique répondant de manière satisfaisante à ces diverses exigences ; elle a également pour objet toute armoire, et en particulier toute armoire électrique, mettant en oeuvre au moins une telle agrafe.

L'agrafe suivant l'invention est d'une manière générale caractérisée en ce que, destinée à intervenir entre un élément de bâti qui surplombe au moins localement un panneau permettant de contrebuter la plaque à fixer, elle comporte, suivant une forme générale de L, un jambage et une traverse, le jambage comportant, à distance de la traverse, une console par laquelle il est apte à trouver un appui sur une partie au moins de l'élément de bâti tournée vers le panneau, et la traverse présentant, à l'opposé du jambage, des moyens de prise sur la plaque à fixer.

Il s'avère, tout d'abord, que la forme en L de l'agrafe suivant l'invention est particulièrement favorable tant à une mise en place et à un retrait simples et aisés de cette agrafe qu'à une bonne tenue mécanique de celle-ci, et qu'elle matérialise donc de manière particulièrement simple le compromis nécessaire entre ces deux exigences.

Si désiré, cependant, et cela est le cas dans une forme préférée de réalisation de l'invention, il est prévu, du côté opposé à la traverse, et sensiblement dans le prolongement de celle-ci, au moins une languette anti-retour présentant, en saillie sur sa surface opposée au jambage, des moyens de butée par lesquels elle est apte à porter sur la tranche de la plaque à fixer.

Une telle languette anti-retour est en effet de nature à s'opposer à tout retrait intempestif de l'agrafe, au bénéfice de la tenue mécanique de celle-ci, et elle contribue donc avantageusement à rendre cette agrafe particulièrement sûre.

Le retrait éventuel de l'agrafe suivant l'invention, lorsqu'il est désiré, reste malgré cela parfaitement possible, à l'aide, par exemple, d'un simple tournevis.

De manière assez paradoxale, dans le cas où les moyens de prise de la traverse de l'agrafe sur la plaque à fixer interviennent en saillie sur cette traverse, cela est particulièrement favorable à l'obtention d'une bonne continuité électrique.

De fait, l'expérience montre que, en raison des inévitables défauts de géométrie qui affectent la traverse, cette bonne continuité électrique ne peut pas être atteinte avec le degré de certitude requis si cette traverse intervient à plat.

Suivant une caractéristique avantageusement de l'invention, le parti est pris, pour surmonter cette difficulté, de prévoir les moyens d'appui nécessaires en saillie sur cette traverse, pour un meilleur contrôle de cette continuité électrique.

Préférentiellement, suivant un développement de l'invention, ces moyens d'appui sont d'ailleurs fractionnés en bossages, pour l'obtention d'une pression locale de contact élevée.

En effet, cette pression locale de contact élevée induit avantageusement une rupture des couches superficielles d'oxydation ou de passivation qui, éventuellement présentes entre les zones de contact en cause, seraient de nature à nuire à la qualité du contact électrique obtenu entre celles-ci.

Conjointement, la faible extension de ces zones de contact permet avantageusement d'obtenir une résistance de constriction favorable au passage d'une intensité élevée.

Les caractéristiques et avantages de l'invention ressortiront, d'ailleurs, de la description qui va suivre, à titre d'exemple, en référence aux dessins annexés sur lesquels :
- la figure 1 est, avec un arrachement local, une vue en perspective d'une armoire dans laquelle interviennent des agrafes suivant l'invention ;
- la figure 2 est, à échelle supérieure, et suivant la ligne II-II de la figure 1, une vue partielle en coupe transversale de cette armoire, au droit d'une de ces agrafes ;
- la figure 3 reprend, à échelle supérieure, le détail de la figure 2 repéré par un encart III sur cette figure 2 ;
- la figure 4 est une vue en perspective d'une agrafe suivant l'invention, vue de l'arrière ;
- la figure 5 en est une autre vue en perspective, vue de l'avant ;
- la figure 6 en est, à échelle supérieure, une vue partielle en coupe transversale, suivant la ligne VI-VI de la figure 5 ;
- les figures 7A et 7B sont des vues en coupe transversale qui, analogues à celle de la figure 2, se rapportent chacune respectivement à deux phases successives de mise en place de la plaque dont les agrafes suivant l'invention assurent la fixation ;
- la figure 8 est, elle aussi, une vue en coupe analogue à celle de la figure 2, pour une variante de réalisation de l'élément de bâti sur lequel prennent appui ces agrafes ;
- la figure 9 est une vue en coupe transversale d'une variante de réalisation de l'agrafe suivant l'invention.

Ces figures illustrent, à titre d'exemple, l'application de l'invention à une armoire 10, qui, par exemple, est une armoire électrique.

Cette armoire 10 ne relevant pas, dans tous ses constituants, de la présente invention, elle ne sera pas décrite dans tous ses détails ici.

Seuls seront mentionnés les constituants de cette armoire 10 nécessaires à la compréhension de l'invention.

Il suffira, à cet égard, d'indiquer que, de manière connue en soi, cette armoire 10 comporte, globalement, d'une part, un bâti 11, formé d'éléments de bâti 12, dont certains sont verticaux et dont d'autres sont horizontaux, et, d'autre part, un habillage 13 formé de panneaux 14, dont un constitue par exemple une porte, et dont un autre, au moins, est évidé d'au moins un ajour 15.

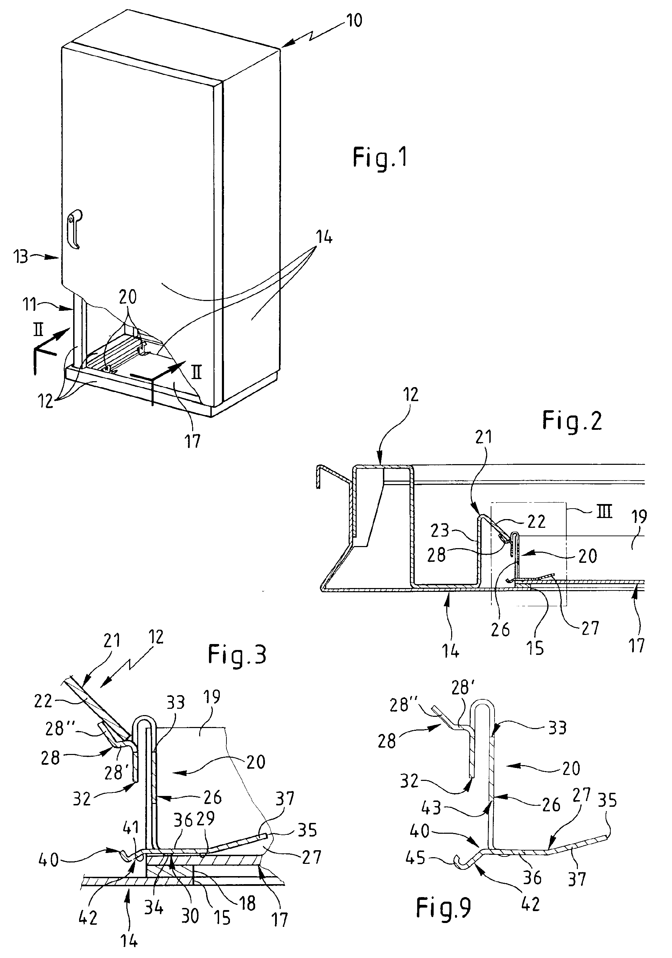

Dans la forme de réalisation représentée, seul l'un des panneaux 14 comporte un tel ajour 15, et, ainsi qu'il est mieux visible sur la figure 2, il s'agit, en pratique, du panneau horizontal inférieur.

En pratique, également, ici, l'ajour 15 évidant ce panneau 14 est unique et son contour est rectangulaire.

De manière connue en soi, il est associé, à ce panneau 14, une plaque 17, dite plaque d'ajour, et désignée ci-après comme telle, qui ferme de manière amovible l'ajour 15, et dont le contour, homothétique de celui de cet ajour 15, est supérieur à ce dernier.

La plaque d'ajour 17 vient donc s'appliquer contre le panneau 14 autour de son ajour 15, soit directement, soit indirectement.

Dans la forme de réalisation représentée, elle s'applique au panneau 14 par l'intermédiaire d'un joint d'étanchéité 18 qui s'étend annulairement autour de l'ajour 15.

En outre, dans cette forme de réalisation représentée, la plaque d'ajour 17 présente un rebord 19 le long de chacun de deux bords opposés.

Il s'agit, en l'espèce, des bords parallèles aux éléments de bâti 12 avant et arrière correspondants du bâti 11.

Aucun rebord n'est par contre prévu le long des deux autres bords de la plaque d'ajour 17, qui sont donc libres.

De manière connue en soi, enfin, il est prévu au moins une agrafe 20, métallique et élastique, qui, prenant appui sur un élément de bâti 12, porte sur la plaque d'ajour 17, pour la fixation de celle-ci et/ou l'établissement d'une continuité électrique entre elle et cet élément de bâti 12.

Dans la forme de réalisation représentée, il est prévu, à distance l'une de l'autre, deux agrafes 20 le long de chacun des deux bords libres de la plaque d'ajour 17, c'est-à-dire le long de chacun des deux bords de cette plaque d'ajour 17 qui sont parallèles aux éléments de bâti 12 latéraux correspondants du bâti 11.

Pour des raisons qui sont bien connues par elles-mêmes, et qui n'ont pas à être détaillées ici, ces éléments de bâti 12 forment chacun, localement, à l'intérieur de l'armoire 10, une glissière 21 parallèle au panneau 14 concerné.

Dans les formes de réalisation représentées, cette glissière 21 comporte un bord tombé 22 dirigé vers ce panneau 14.

Suivant un aspect de l'invention relatif à l'armoire 10, ce bord tombé 22 des glissières 21 s'étend, dans la forme de réalisation représentée sur les figures 1 à 7, en oblique vers l'intérieur par rapport au panneau 14 concerné, suivant par exemple un angle sensiblement égal à 45°.

Plus précisément, dans cette forme de réalisation, chacune des glissières 21 se réduit à l'arête, arrondie, intervenant entre son bord tombé 22 et un flasque de support 23 avec lequel celui-ci est en continuité.

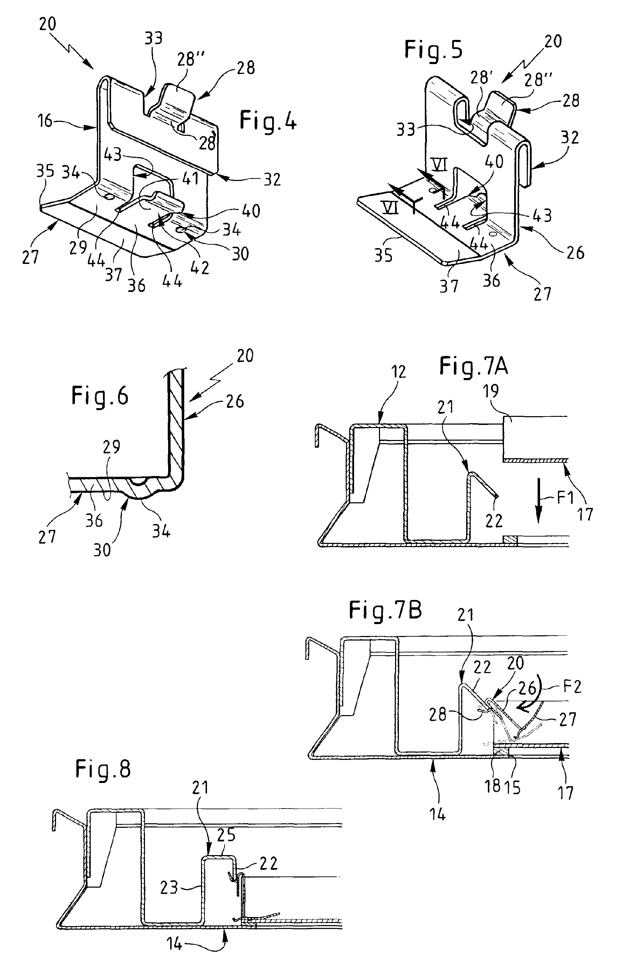

En variante, figure 8, et de manière connue en soi, le bord tombé 22 s'étend perpendiculairement au panneau 14 concerné, et chacune des glissières présente, parallèlement à ce panneau 14, entre son bord tombé 22 et son flasque de support 23, un tronçon de raccordement 25 plat.

Quoi qu'il en soit, suivant l'invention, chacune des glissières 21 et la plaque d'ajour 17 sont dépourvues de tout revêtement, autre que métallique, et, plus précisément, de tout revêtement isolant.

De même, chacune des agrafes 20 mises en oeuvre est dépourvue de tout revêtement isolant.

Par exemple, les glissières 21 et la plaque d'ajour 17 sont en tôle d'acier galvanisé nu, et les agrafes 20 sont en acier étamé.

En pratique, toutes les agrafes 20 sont identiques entre elles.

Seule l'une d'elles sera donc maintenant décrite dans ce qui suit.

Suivant l'invention, destinée à intervenir entre un élément de bâti 12 qui surplombe au moins localement le panneau 14 permettant de contrebuter la plaque d'ajour 17 à fixer, une telle agrafe 20 comporte, globalement, suivant une forme générale de L, un jambage 26 et une traverse 27, le jambage 26 comportant, lui-même, à distance de la traverse 27, une console 28 par laquelle il est apte à trouver un appui sur une partie au moins de l'élément de bâti 12 tournée vers le panneau 14, en l'espèce le bord tombé 22 de la glissière 21 formée par cet élément de bâti 12, et la traverse 27 présentant, corollairement, en saillie sur sa surface opposée au jambage 26, en l'espèce sa surface inférieure 29, suivant des dispositions décrites plus en détail ultérieurement, des moyens d'appui 30 par lesquels elle est apte à porter sur la plaque d'ajour 17 à fixer.

Dans les formes de réalisation représentées, la console 28 équipant le jambage 26 s'étend du côté de ce jambage 26 opposé à la traverse 27.

Elle s'étend donc au dos de ce jambage 26.

En outre, dans ces formes de réalisation, cette console 28 forme une gouttière dont la concavité est elle-même tournée du côté opposé à la traverse 27, en étant donc en l'espèce tournée vers le haut.

Préférentiellement, et cela est le cas dans les formes de réalisation représentées, l'agrafe 20 suivant l'invention est formée à partir d'un feuillard convenablement découpé et plié, et, son jambage 26 comportant, à son dos, à la manière d'une crosse, un repli en U 32, qui s'étend parallèlement au jambage 26, à distance de celui-ci, la console 28 équipant ce jambage 26 est formée à la faveur d'un crevé 33 affectant localement ce repli en U 32.

En pratique, le crevé 33 du repli en U 32 du jambage 26 intervient dans la zone médiane de celui-ci et il s'étend sur le jambage 26.

En pratique, également, la console 28 est formée par une patte qui, à partir du repli en U 32, comporte successivement deux tronçons 28', 28" à savoir, à compter du repli en U 32, un premier tronçon 28', qui s'étend sensiblement perpendiculairement à ce repli en U 32, et un deuxième tronçon 28", qui, lui, s'étend en oblique vers le haut par rapport à celui-ci, suivant par exemple un angle sensiblement égal à 45°.

Préférentiellement, les moyens d'appui 30 que présente la traverse 27 de l'agrafe 20 suivant l'invention sont fractionnés en bossages 34.

Par exemple, et tel que représenté, ces moyens d'appui 30 comportent au moins deux bossages 34, qui, établis à distance l'un de l'autre, interviennent suivant un alignement parallèle au jambage 26.

Dans les formes de réalisation représentées, seuls deux de tels bossages 34 sont prévus.

Ainsi qu'il est mieux visible sur la figure 6 pour l'un d'eux, les bossages 34 sont chacun globalement arrondis en forme de calotte sphérique.

Quoi qu'il en soit, les moyens d'appui 30 que présente la traverse 27, ici constitués de bossages 34, sont préférentiellement, et très simplement, formés par une simple déformation locale affectant à pleine épaisseur cette traverse 27.

Dans les formes de réalisation représentées, et pour des raisons qui apparaîtront ultérieurement, le bord 35 de la traverse 27 opposé au jambage 26 est au moins localement relevé en oblique du côté de ce jambage 26.

Par exemple, et tel que représenté, il en est ainsi en continu, et de manière uniforme, tout au long de ce bord 35.

La traverse 27 comporte, donc, successivement, dans les formes de réalisation représentées, deux pans 36, 37 formant un dièdre entre eux, à savoir, à compter du jambage 26, un premier pan 36, qui s'étend sensiblement perpendiculairement à ce jambage 26, et un deuxième pan 37, qui s'étend, lui, en oblique par rapport au jambage 26, en se rapprochant du bord supérieur de ce jambage 26 au fur et à mesure qu'il s'éloigne de son bord inférieur.

Préférentiellement, et cela est le cas dans les formes de réalisation représentées, l'agrafe 20 suivant l'invention comporte, du côté opposé à la traverse 27, au moins une languette anti-retour 40 formant, du côté de sa surface opposée au jambage 26, en l'espèce du côté de sa surface inférieure 41, des moyens de butée 42 par lesquels elle est apte à porter sur la tranche de la plaque d'ajour 17 à fixer.

Par exemple, et tel que représenté, une seule languette anti-retour 40 étant prévue, elle s'étend dans la zone médiane de la traverse 27, et sa surface inférieure 41 est en continuité avec la surface inférieure 29 de cette dernière.

Dans la forme de réalisation représentée, cette languette anti-retour 40 est formée à la faveur d'un crevé 43 du jambage 26, et elle s'enracine dans la traverse 27 à distance de ce jambage 26, en étant individualisée latéralement dans cette traverse 27 par des fentes 44 affectant cette dernière.

Autrement dit, le crevé 43 du jambage 26 s'étend sur la traverse 27, et, plus précisément, sur le premier pan 36 de celle-ci.

En pratique, ce crevé 43 s'étend à l'aplomb du crevé 33 du repli en U 32 du jambage 26.

En pratique, également, il est encadré par les deux bossages 34 formant les moyens d'appui 30 de la traverse 27.

Dans les formes de réalisation représentées, les moyens de butée 42 que présente la languette anti-retour 40 résultent de ce que cette languette anti-retour 40 s'étend globalement en oblique, vers le bas, par rapport à la traverse 27.

En outre, dans ces formes de réalisation, la languette anti-retour 40 présente, à son extrémité libre, une déformation locale 45 qui l'affecte à pleine épaisseur pour faciliter sa mise place.

Par exemple, figures 1 à 8, cette déformation locale 45 est en forme de dièdre.

En variante, figure 9, elle est en forme de gouttière.

Pour la mise en place de la plaque d'ajour 17, il peut, par exemple, être procédé au montage mécanique suivant.

Dans un premier temps, et tel que schématisé par une flèche F1 sur la figure 7A, cette plaque d'ajour 17 est engagée verticalement entre les glissières 21, jusqu'à venir reposer sur le joint d'étanchéité 18 ceinturant l'ajour 15 du panneau 14 à fermer, figure 7B.

Dans un deuxième temps, et tel que représenté pour l'une d'elles sur la figure 7B, chacune des agrafes 20 à mettre en oeuvre est amenée en prise par sa console 28 avec la tranche du bord tombé 22 de la glissière 21 concernée, avec sa traverse 27 dirigée vers l'intérieur par rapport à ce bord tombé 22.

Dans un troisième temps, enfin, et tel que schématisé par une flèche F2 sur la figure 7B, chacune des agrafes 20 est basculée autour de la tranche du bord tombé 22 de la glissière 21 avec laquelle elle est en prise jusqu'à ce que, tel que représenté sur la figure 2, son jambage 26 s'étende sensiblement perpendiculairement à la plaque d'ajour 17 à fixer.

Lorsqu'il en est ainsi, le joint d'étanchéité 18 sous-jacent à cette plaque d'ajour 17 se trouve comprimé, et chacune des agrafes 20 est arc-boutée entre la plaque d'ajour 17 et l'élément de bâti 12 sur lequel elle prend appui, et, plus précisément, entre la plaque d'ajour 17 et la glissière 21 formée par cet élément de bâti 12.

Conjointement, les moyens de butée 42 que présente la languette anti-retour 40 d'une telle agrafe 20 s'opposent à tout mouvement rétrograde intempestif de cette agrafe 20, par butée sur la tranche correspondante de la plaque d'ajour 17.

La bonne tenue mécanique de l'agrafe 20 se trouve ainsi avantageusement confortée.

Ainsi qu'on le notera, au terme du montage mécanique ayant conduit à sa mise en place, une agrafe 20 suivant l'invention est simplement en prise par sa console 28 avec la tranche du bord tombé 22 de la glissière 21 correspondante, ce qui facilite grandement ce montage mécanique.

Ainsi qu'on le notera, également, au terme de ce montage mécanique, une agrafe 20 suivant l'invention assure conjointement par elle-même dans d'excellentes conditions toute la continuité électrique souhaitée entre l'élément de bâti 12 correspondant et la plaque d'ajour 17.

Les zones de contact correspondantes sont alors formées, d'une part, du côté de l'élément de bâti 12, par la tranche du bord tombé 22 de la glissière 21 et le fond de la gouttière formée par la console 28 de l'agrafe 20, et, d'autre part, du côté de la plaque d'ajour 17, par cette plaque d'ajour 17 et les bossages 34 formant les moyens d'appui 30 de la traverse 27 de l'agrafe 20.

Malgré la bonne tenue mécanique d'une agrafe 20 suivant l'invention une fois qu'elle est mise en place, sa dépose reste aisée.

Il suffit, par exemple, pour ce faire, d'engager la lame d'un tournevis dans le crevé 33 du repli en U 32 de son jambage 26 et d'exercer sur ce jambage 26 une poussée qui, induisant une rotation de cette agrafe 20 inverse de celle ayant conduit à sa pose, contraint les moyens de butée 42 de sa languette anti-retour 40 à s'effacer au contact de la plaque d'ajour 17, ce qui permet sa libération.

Bien entendu, la présente invention ne se limite pas aux formes de réalisation décrites et représentées, mais englobe toute variante d'exécution.

## Revendications

1. Agrafe métallique et élastique pour la fixation d'une plaque (17) et/ou l'établissement d'une continuité électrique avec une telle plaque (17), caractérisée en ce que, destinée à intervenir entre un élément de bâti (12) qui surplombe au moins localement un panneau (14) permettant de contrebuter la plaque (17) à fixer, elle comporte, suivant une forme générale de L, un jambage (26) et une traverse (27), le jambage (26) comportant, à distance de la traverse (27), une console (28) par laquelle il est apte à trouver un appui sur une partie au moins de l'élément de bâti (12) tournée vers le panneau (14), et la traverse (27) présentant, à l'opposé du jambage (26), des moyens de prise (30, 40) sur la plaque (17) à fixer.

2. Agrafe suivant la revendication 1, caractérisée en ce que la console (28) équipant le jambage (26) s'étend du côté de ce jambage (26) opposé à la traverse (27).

3. Agrafe suivant l'une quelconque des revendications 1, 2, caractérisée en ce que la console (28) équipant le jambage (26) forme une gouttière dont la concavité est tournée du côté opposé à la traverse (27).

4. Agrafe suivant l'une quelconque des revendications 1 à 3 et formée à partir d'un feuillard convenablement découpé et plié, caractérisée en ce que le jambage (26) comporte, à son dos, à la manière d'une crosse, un repli en U (32), et la console (28) équipant ce jambage (26) est formée à la faveur d'un crevé (33) affectant localement ce repli en U (32).

5. Agrafe suivant la revendication 4, caractérisée en ce que le crevé (33) du repli en U (32) du jambage (26) intervient dans la zone médiane de celui-ci.

6. Agrafe suivant l'une quelconque des revendications 1 à 5, caractérisée en ce que lesdits moyens de prise comportent, du côté opposé à la traverse (27), au moins une languette anti-retour (40) formant des moyens de butée (42) par lesquels elle est apte à porter sur la tranche de la plaque (17) à fixer.

7. Agrafe suivant la revendication 6 et formée à partir d'un feuillard convenablement découpé et plié, caractérisée en ce que la languette anti-retour (40) est formée à la faveur d'un crevé (43) du jambage (26).

8. Agrafe suivant la revendication 7, caractérisée en ce que la languette anti-retour (40) s'enracine dans la traverse (27) à distance du jambage (26), en étant individualisée latéralement dans cette traverse (27) par des fentes (44) affectant cette dernière.

9. Agrafe suivant l'une quelconque des revendications 7, 8, caractérisée en ce que les moyens de butée (42) que présente la languette anti-retour (40) résultent de ce que cette languette anti-retour (40) s'étend globalement en oblique par rapport à la traverse (27).

10. Agrafe suivant l'une quelconque des revendications 6 à 9, caractérisée en ce que, une seule languette anti-retour (40) étant prévue, elle s'étend dans la zone médiane de la traverse (27).

11. Agrafe suivant l'une quelconque des revendications 1 à 10, caractérisée en ce que lesdits moyens de prise comportent, en saillie sur la surface de la traverse (27) opposée au jambage (26), des moyens d'appui (30) fractionnés en bossages (34).

12. Agrafe suivant la revendication 11, caractérisée en ce que les moyens d'appui (30) que présente la traverse (27) comportent au moins deux bossages (34), qui, établis à distance l'un de l'autre, interviennent suivant un alignement parallèle au jambage (26).

13. Agrafe suivant l'une quelconque des revendications 11, 12, caractérisée en ce que les bossages (34) sont arrondis en forme de calotte sphérique.

14. Agrafe suivant l'une quelconque des revendications 1 à 13, caractérisée en ce que lesdits moyens de prise comportent, en saillie sur la surface de la traverse (27) opposée au jambage (26), des moyens d'appui (30) formés par une simple déformation locale affectant à pleine épaisseur cette traverse (27).

15. Agrafe suivant l'une quelconque des revendications 1 à 14, caractérisée en ce que le bord (35) de la traverse (27) opposé au jambage (26) est au moins localement relevé en oblique du côté de ce jambage (26).

16. Agrafe suivant l'une quelconque des revendications 1 à 15, caractérisée en ce qu'elle est dépourvue de tout revêtement isolant.

17. Armoire, en particulier armoire électrique, du genre comportant un bâti (11) formé d'éléments de bâti (12), un habillage (13) formé de panneaux (14) dont un, au moins, est évidé d'au moins un ajour (15), une plaque (17), dite plaque d'ajour, qui ferme de manière amovible cet ajour (15), et au moins une agrafe (20), métallique et élastique, qui, prenant appui sur un élément de bâti (12), porte sur la plaque d'ajour (17) pour la fixation de celle-ci et/ou l'établissement d'une continuité électrique entre elle et cet élément de bâti (12), caractérisée en ce que l'agrafe (20) est conforme à l'une quelconque des revendications 1 à 16.

18. Armoire suivant la revendication 17, caractérisée en ce que, le panneau (14) concerné étant le panneau horizontal inférieur de l'habillage (13), et l'élément de bâti (12) correspondant formant localement une glissière (21) parallèle à ce panneau (14), cette glissière (21) comporte un bord tombé (22) dirigé vers ce panneau (14), et, par sa console (28), l'agrafe (20) est simplement en prise avec la tranche de ce bord tombé (22).

19. Armoire suivant la revendication 18, caractérisée en ce que le bord tombé (22) de la glissière (21) s'étend en oblique vers l'intérieur par rapport au panneau (14).

20. Armoire suivant la revendication 19, caractérisée en ce que la glissière (21) se réduit à l'arête, arrondie, intervenant entre son bord tombé (22) et un flasque de support (23) avec lequel celui-ci est en continuité.

21. Armoire suivant l'une quelconque des revendications 17 à 19, caractérisée en ce que la glissière (21) et la plaque d'ajour (17) sont dépourvues de tout revêtement isolant.
